Europäisches Patentamt

European Patent Office

Office européen des brevets

(19)

(11) **EP 1 226 882 A1**

## (12) EUROPEAN PATENT APPLICATION
published in accordance with Art. 158(3) EPC

(43) Date of publication:
**31.07.2002 Bulletin 2002/31**

(21) Application number: **00962817.3**

(22) Date of filing: **25.09.2000**

(51) Int Cl.⁷: **B09B 3/00**, B01D 53/34,
C02F 1/58, C02F 1/72,
A62D 3/00

(86) International application number:
**PCT/JP00/06566**

(87) International publication number:
**WO 01/21332 (29.03.2001 Gazette 2001/13)**

(84) Designated Contracting States:
**AT BE CH CY DE DK ES FI FR GB GR IE IT LI LU
MC NL PT**
Designated Extension States:
**AL LT LV MK RO SI**

(30) Priority: **24.09.1999 JP 27039299
10.07.2000 JP 2000208788
12.07.2000 JP 2000211258
14.07.2000 JP 2000213613**

(71) Applicant: **Idemitsu Kosan Co., Ltd.
Tokyo 100-0005 (JP)**

(72) Inventors:
• **KAWABATA, Takahiro
Sodegaura-shi, Chiba 299-0205 (JP)**
• **MIYAMOTO, Hideo
Sodegaura-shi, Chiba 299-0205 (JP)**
• **SUZUKI, Motoshi
Sodegaura-shi, Chiba 299-0205 (JP)**

(74) Representative:
**Gille Hrabal Struck Neidlein Prop Roos
Patentanwälte,
Brucknerstrasse 20
40593 Düsseldorf (DE)**

(54) **METHOD FOR DECOMPOSING REFRACTORY HAZARDOUS SUBSTANCE AND
DECOMPOSING AGENT**

(57)    A process for decomposing hardly decomposable harmful substances which comprises bringing the hardly decomposable harmful substances into contact with laccase and/or a microorganism producing laccase and an agent for decomposing hardly decomposable harmful substances which comprises at least one selected from laccase and microorganisms producing laccase. The hardly decomposable harmful substances can be efficiently decomposed and converted into harmless substances with the microorganism exhibiting excellent stability in production of the enzyme.

EP 1 226 882 A1

**Description**

TECHNICAL FIELD

The present invention relates to a process for decomposing hardly decomposable harmful substances contained in contaminated water and soil and an agent used for said process and, more particularly, to a process for decomposing hardly decomposable harmful substances such as specific components in agricultural chemicals, raw materials and products of the chemical industry and specific chemical substances formed during incineration of garbage and industrial waste materials and hardly decomposable harmful substances used as cleaning agents in the paper and pulp industry and industries related to precision machineries so that the above substances are converted into harmless substances, and an agent used for said process.

BACKGROUND ART

Various hardly decomposable chemical substances which are well known to be harmful for human health are discharged into the natural environment from incineration apparatuses for city garbage and industrial waste materials and from various other incineration apparatuses and various instruments. Various organic substances adversely affecting the environment are discharged in processes for producing chemical substances. The discharge of these harmful substances is a great social problem.

Among these substances, for example, dioxins are hardly decomposed by organisms and absorbed into many organisms. It is well known that the absorbed substances go through the food chains, are accumulated into bodies of animals and concentrated there and cause the carcinogenic and the teratogenic effects.

Methods for suppressing generation of dioxins have been examined and proposed. For example, burning exhaust gases from automobiles and incineration apparatuses at high temperatures has been proposed. However, generation of dioxins cannot be sufficiently suppressed by this method. Dioxins released into the atmosphere precipitate on the earth together with rain or snow and are accumulated there. No effective methods for converting the dioxins staying in the natural environment into harmless substances have been found.

Hardly decomposable phenols have been separated by adsorption with active carbon or decomposed with active sludge. However, halogenated phenols, alkylphenols, bisphenols and esters of phthalic acid have problems in that these compounds are hardly biologically decomposed due to the chemical structures and tend to accumulated in the environment. These compounds are biologically concentrated through the food chains and cause various harmful effects on the human being and organisms in the environment.

On the other hand, in soil in the industrial area in the field of the paper and pulp industry and industries related to precision machineries, contamination with hardly decomposable harmful substances of halogenated hydrocarbons such as tetrachloroethylene, trichloroethylene and dichloroethylene is considered to have spread significantly widely. Actually, it is reported in many environmental investigations that the hardly decomposable harmful substances were detected. It is considered that these hardly decomposable harmful substances residual in soil are dissolved into ground water due to rain fall and spread widely in the surrounding area. In particular, contamination of the ground water used as the source of drinking water has become a serious social problem since these substances are suspected to be carcinogenic and stable in the environment,.

Therefore, from the standpoint of the environmental protection, it is very important that the hardly decomposable harmful substances are decomposed and removed and contaminated aqueous media such as ground water, soil and the atmosphere around the contaminated materials are cleaned. From the above point of view various technologies necessary for the cleaning have been developed.

For example, decomposition technologies of chemical substances hardly decomposable in the natural environment such as dioxins by microorganisms have been studied recently. It is reported that enzymes decomposing lignin which are produced by some types of microorganisms can decompose dioxins [Bio Industry Vol. 15, No. 2, Pages 5 to 13 (1998); and Kagaku, Vol. 52, No. 10, Pages 24 and 25 (1997)].

It is further shown in the above reports that, concerning the decomposition of dioxins by enzymes decomposing lignin which are produced by microorganisms, enzymes decomposing lignin produced by white rot fungi among wood rot fungi belonging to the basidiomycetes can decompose various chemical substances such as dioxins. It is also shown that the white rot fungi grow using polysaccharides such as cellulose and hemicellulose which are main components of wood as the nutrients and decompose lignin in wood using the polysaccharides as the energy source. Therefore, in forest areas where the decay bacteria live, dioxins precipitated from the atmosphere together with rain water tend to be decomposed with the enzymes decomposing lignin which are produced by the decay bacteria. However, since the production of the enzymes decomposing lignin by the white rot fungi varies depending on the content of the composition of the culture and, in particular, the content of nitrogen and on the condition of growth of the white rot fungi, the enzymes decomposing lignin are occasionally not produced at all in some environment around the white rot fungi. Therefore, producing the enzymes decomposing lignin by the white rot fungi has a drawback in that the stability is not sufficient.

On the other hand, it is highly probable that, in the many areas except for the forest areas where the white rot fungi live, the accumulation of dioxins proceeds further and the adverse effects on living things seriously intensify. Under the above circumstances, development of a process for decomposing hardly decomposable harmful substances, which are contained in exhaust gases, waste water (waste liquid) and ash discharged from various plants and incineration apparatuses into the natural environment and accumulated in soil contaminated with such substances, and converting these substances into harmless substances has been strongly desired.

DISCLOSURE OF THE INVENTION

The present invention has an object of providing a process for decomposing hardly decomposable harmful substances, which are contained in exhaust gas, industrial waste water (waste liquid) and ash discharged from incineration apparatuses and manufacturing facilities into the natural environment and accumulated in water and soil contaminated with such substances, and converting these substances into harmless substances by using an enzyme exhibiting excellent stability or microorganisms producing the enzyme with stability.

As the result of extensive researches in view of the above objects, the present inventors have found that laccase and microorganisms producing laccase are effective for decomposing the above hardly decomposable harmful substances. The present invention has been accomplished on the basis of this finding.

The present invention can be summarized as follows::

(1) A process for decomposing hardly decomposable harmful substances which comprises bringing the hardly decomposable harmful substances into contact with at least one enzyme or microorganism selected from laccase and microorganisms producing laccase;

(2) A process described in (1), wherein the hardly decomposable harmful substances are hardly decomposable aromatic compounds having 6 or more carbon atoms or hardly decomposable halogenated hydrocarbons having 1 to 4 carbon atoms and at least one halogen atom;

(3) A process described in (2), wherein the hardly decomposable aromatic compounds having 6 or more carbon atoms are at least one compound selected from dioxins, halogenated biphenyls, bisphenols, alkylphenols, halogenated phenols and esters of phthalic acid;

(4) A process described in (2), wherein the hardly decomposable halogenated hydrocarbons having 1 to 4 carbon atoms and at least one halogen atom are at least one compound selected from monochloromethane, dichloromethane, trichloromethane, tetrachloromethane, monochloro-ethane, dichloroethane, trichloroethane, monochloroethylene, dichloro-ethylene, trichloroethylene and trichloropropylene;

(5) A process described in (1), wherein the microorganisms producing laccase is a microorganisms belonging to any genera selected from genera of Schizophyllum, Pleurotus, Trametes, Lentinus, Rhizoctonia, Funalia, Pycnoporus, Merulius, Myceliophtora, Coprinus, Agaricus, Pholiota, Flammulina, Ganoderma, Daedaleopsis, Favolus, Lyophyllum and Auricularia;

(6) A process described in (1), wherein the hardly decomposable harmful substances are brought into contact with at least one enzyme or microorganism selected from laccase fixed to a support material and microorganisms producing laccase and present in combination with a support material;

(7) A process described in (6), wherein the support material is at least one support material selected from activated carbon, charcoal, pumice, porous ceramics, alginic acid, ion exchange resins and photo-crosslinked resins;

(8) A process described in (6), wherein the support material has a cylindrical shape or a sheet shape knitted using polyurethane foam, carbon fiber or a synthetic resin of a fiber form;

(9) A process described in (1), wherein the hardly decomposable harmful substances are decomposed by bringing the hardly decomposable harmful substances into contact with laccase fixed to fine particles of a magnetic material;

(10) A process described in (9), wherein the fine particles of a magnetic material are fine particles of at least one magnetic material selected from maghemite, manganese ferrite, cobalt ferrite, nickel ferrite, zinc ferrite, magnetite and chromium dioxide;

(11) A process described in (1), wherein the hardly decomposable harmful substances and at least one enzyme or microorganism selected from laccase and microorganisms producing laccase are brought into contact with each other in water or soil in pH range of 3 to 11;

(12) A process for decomposing dioxins which comprises, for decomposing dioxins having 1 or more halogen atoms or coplanar PCB, bringing the dioxins or the coplanar PCB into contact with at least one enzyme or microorganism selected from laccase and microorganisms producing laccase in water or soil;

(13) An agent for decomposing hardly decomposable harmful substances which comprises at least one enzyme or microorganism selected from laccase and microorganisms producing laccase;

(14) An agent described in (13), which further comprises a mediator;

(15) An agent described in (13), wherein the microorganisms producing laccase are microorganisms belonging to any genera selected from genera of Schizophyllum, Pleurotus, Trametes, Lentinus, Rhizoctonia, Funalia, Pycnoporus, Merulius, Myceliophtora, Coprinus, Agaricus, Pholiota, Flammulina, Ganoderma, Daedaleopsis, Favolus, Lyophyllum and Auricularia;

(16) An agent for decomposing hardly decomposable harmful substances which comprises at least one enzyme or microorganism selected from laccase fixed to a support material and microorganisms producing laccase and present in combination with a support material;

(17) An agent described in (16), wherein the support material is at least one support material selected from activated carbon, charcoal, porous ceramics, alginic acid, ion exchange resins and photo-crosslinked resins;

(18) An agent described in (16), wherein the support material has a sheet shape or a cylindrical shape knitted using polyurethane foam, carbon fiber or a synthetic resin of a fiber form;

(19) An agent for decomposing hardly decomposable harmful substances which comprises laccase fixed to fine particles of a magnetic material;

(20) An agent described in (19), wherein the fine particles of a magnetic material are fine particles of at least one magnetic material selected from maghemite, manganese ferrite, cobalt ferrite, nickel ferrite, zinc ferrite, magnetite and chromium dioxide;

(21) An agent described in any one of (13), (16) and (19), wherein the hardly decomposable harmful substances are hardly decomposable aromatic compounds having 6 or more carbon atoms or hardly decomposable halogenated hydrocarbons having 1 to 4 carbon atoms and at least one halogen atom;

(22) An agent described in (21), wherein the hardly decomposable aromatic compounds having 6 or more carbon atoms are at least one compound selected from dioxins, halogenated biphenyls, bisphenols, alkylphenols, halogenated phenols and esters of phthalic acid; and

(23) An agent described in (21), wherein the hardly decomposable halogenated hydrocarbons having 1 to 4 carbon atoms and at least one halogen atom are at least one compound selected from monochloromethane, dichloromethane, trichloromethane, tetrachloromethane, monochloroethane, dichloroethane, trichloroethane, monochloroethylene, dichloroethylene, trichloroethylene and trichloropropylene.

## THE MOST PREFERRED EMBODIMENT TO CARRY OUT THE INVENTION

The preferred embodiments of the present invention will be described in the following.

In the process for decomposing hardly decomposable harmful substances of the present invention, the hardly decomposable harmful substances are brought into contact with laccase and/or a microorganism producing laccase and made harmless by converting into substances exhibiting no toxicity or decreased danger to human bodies or other animals.

In the above treatment, the hardly decomposable harmful substances may be treated after being separated from exhaust gases or waste water (waste liquid) discharged directly from the source, ash formed by incineration or contaminated soil. However, since handling of such substances is dangerous, it is preferable that the exhaust gas, waste water, ash or contaminated soil is treated.

In the present invention, examples of the hardly decomposable harmful substance include hardly decomposable aromatic compounds having 6 or more carbon atoms and hardly decomposable halogenated hydrocarbons having 1 to 4 carbon atoms and at least one halogen atom.

Examples of the hardly decomposable aromatic compound having 6 or more carbon atoms include dioxins, halogenated biphenyls, bisphenols, alkylphenols, halogenated phenols and esters of phthalic acid.

The dioxins are dioxins having one or more chlorine atoms or bromine atoms which are obtained by substituting hydrogen atoms in two benzene rings of dibenzo-p-dioxin or dibenzofuran with chlorine atoms or bromine atoms. The dioxins include a great variety of compounds having various numbers of chlorine atoms or bromine atoms as the substituents at various positions on the benzene rings.

Among the dioxins, polychlorinated compounds having 4 or more chlorine atoms in one molecule exhibit particularly high toxicity to the human body. Examples of such compounds include polychlorinated compounds of dibenzo-p-dioxin such as 2,3,7,8-tetrachlorodibenzo-p-dioxin, 1,2,3,7,8-pentachlorodibenzo-p-dioxin, 1,2,3,4,7,8-hexachlorodibenzo-p-dioxin, 1,2,3,4,6,7,8-heptachlorodibenzo-p-dioxin and 1,2,3,4,6,7,8,9-octachlorodibenzo-p-dioxin; and polychlorinated compounds of dibenzofuran such as 2,3,7,8-tetrachlorodibenzofuran, 1,2,3,7,8-pentachlorodibenzofuran, 2,3,4,7,8-pentachlorodibenzofuran, 1,2,3,4,7,8-hexachlorodibenzofuran, 1,2,3,6,7,8-hexachlorodibenzofuran, 1,2,3,7,8,9-hexachlorodibenzofuran, 2,3,4,6,7,8-hexachlorodibenzofuran, 1,2,3,4,6,7,8-heptachlorodibenzofuran and 1,2,3,4,6,7,8,9-octachloro-dibenzofuran.

Examples of the halogenated biphenyl include coplanar PCB's having chlorine atoms at the positions other than the ortho-positions such as 3,3',4,4'-tetrachlorobiphenyl, 3,3',4,4',5-pentachlorobiphenyl and 3,3',4,4',5,5'-hexachlorobiphenyl.

Among the above chlorinated compounds, 2,3,7,8-tetrachloro-dibenzo-p-dioxin exhibits the highest toxicity.

Examples of the bisphenol include 2,2-bis(4-hydroxyphenyl)propane and 1,1-bis(4-hydroxyphenyl)cyclohexane. Between the above compounds, 2,2-bis(4-hydroxyphenyl)propane can be treated advantageously in accordance with the process of the present invention.

Examples of the alkylphenol include nonylphenol, pentylphenol, octylphenol and tertiary-butylphenol.

Examples of the halogenated phenol include dichlorophenol, trichlorophenol, tetrachlorophenol and pentachlorophenol.

Examples of the ester of phthalic acid include dibutyl phthalate, butyl benzyl phthalate and di-2-ethylhexyl phthalate.

In the present invention, examples of the hardly decomposable halogenated hydrocarbon having 1 to 4 carbon atoms and at least one halogen atom include mono-, di-, tri- and tetrahalogenated methanes, halogenated ethanes having 1 to 5 halogen atoms, halogenated ethylenes having 1 to 3 halogen atoms and halogenated propylenes having 2 or 3 halogen atoms.

Specific examples of the halogenated hydrocarbon include monochloromethane, dichloromethane, trichloromethane, tetrachloromethane, monochloroethane, dichloroethane, trichloroethane, monochloroethylene, dichloroethylene, trichloroethylene and trichloropropylene. Among the above compounds, trichloroethylene is advantageously treated in accordance with the process of the present invention.

Many of the above hardly decomposable harmful substances treated in accordance with the process of the present invention are so-called exogenous endocrine disruptor which are suspected to be accumulated in bodies of animals and cause various problems. These substances are chemical substances which are present unevenly in the environment, exhibit functions similar to hormones and disturb endocrine gland. These substances exhibit great adverse effects on the ecology of animals and the human health such as the immunity system, the endocrine system and the neurotic system in extremely small amounts. Therefore, it is desired that the exogenous endocrine disruptor are decomposed and converted into harmless substances. The decomposition process of the present invention is effective, in particular, for decomposition of the above exogenous endocrine disruptor among hardly decomposable harmful substances.

As the microorganism producing laccase which is used for decomposing the above hardly decomposable harmful substances, for example, microorganisms exhibiting high productivity of laccase are used. Examples of the microorganisms producing laccase include microorganisms belonging to any genera selected from genera of Schizophyllum, Pleurotus, Trametes, Lentinus, Rhizoctonia, Funalia; Pycnoporus, Merulius, Myceliophtora, Coprinus, Agaricus, Pholiota, Flammulina, Ganoderma, Daedaleopsis, Favolus, Lyophyllum and Auricularia. The microorganism itself may be used or laccase produced by the microorganism may be used after separation from the liquid culture in accordance with a process for separation such as the process using an ion exchange resin.

The laccase produced by some of the above microorganisms further contains lignin peroxidase and manganese peroxidase which are produced in combination with laccase. The laccase containing lignin peroxidase and manganese peroxidase produced in combination with laccase can also be used as the laccase in the present invention.

In the present invention, a live microorganism producing laccase or a mixture of the live microorganism with laccase separated from the liquid culture of the microorganism can be used. The present invention can be performed by using any of those described above. However, from the standpoint of maintaining the activity of laccase for a long time, it is effective that the live microorganism is used.

When laccase separated from the culture medium of the microorganism is used, it is preferable that a mediator is added so that the activity of laccase is most effectively exhibited. As the mediator, for example, phenol compounds such as 1-hydroxybenzotriazole, aniline compounds such as 2,2'-azinobis(3-ethylbenzothiazoline-6-sulfonic acid) and esters of ethoxyfatty acids are preferably used.

The above microorganism can be cultured in accordance with a conventional method of culture. For example, the microorganism can be cultured using a liquid culture medium of potato dextrose, a liquid culture medium of oat meal or a solid culture medium obtained by mixing wheat bran, rice bran, wood chips, barley and rice straw. In the laboratory, the culture can be conducted in a culture medium of potato dextrose at 20 to 40°C for 5 days. For culture in a great scale, ordinary culture in a tank using a liquid culture medium is preferable. The culture may also be conducted in accordance with the solid culture using a solid component derived from a plant such as whole wheat or an inorganic porous support material impregnated with sugar, nitrogen, phosphorus and minerals.

In the culture of the microorganism, the concentration of microorganism in the obtained product of the culture is in the range of $1 \times 10^2$ cfu (colony forming unit) or greater, preferably in the range of $1 \times 10^2$ to $1 \times 10^{10}$ cfu and preferably in the range of $1 \times 10^3$ to $1 \times 10^7$ cfu per 1 g of the dried organic substances of plants. If the concentration is smaller than the above range, there is the possibility that the growth of the microorganism is slow when water or soil containing the hardly decomposable harmful substances is inoculated with the microorganism and that the preferential growth of the inoculated microorganism becomes difficult in the presence of other microorganisms already present in the water or the soil.

For the culture of the microorganism, any of hyphae and spores can be used. In general, hyphae are used since the culture is easily conducted.

In the present invention, laccase or the microorganism producing laccase described above can be used in the form of laccase fixed to a support material and/or a microorganism present in combination with a support material. Since the activity of laccase can be maintained for a long time when laccase or the microorganism is used in the above form, the advantageous effects can be obtained in that the decomposition of the hardly decomposable harmful substances contained in contaminated water with laccase can be conducted with stability for a long time and that the decomposition can be conducted relatively economically.

As the support material to which laccase is fixed, a support material which can easily adsorb and fix laccase is preferable. Examples of the support material include activated carbon, charcoal, pumice, porous ceramics, alginic acid, ion exchange resins and photo-crosslinked resins. As the support material present in combination with the microorganism producing laccase, the support materials described above and support materials having a cylindrical shape or a sheet shape knitted using polyurethane foam, carbon fiber or a synthetic resin of a fiber form are preferable. Activated carbon, polyurethane foam and porous ceramics are more preferable since disinfection can be conducted easily and the cost is low. When a support material comprising alginic acid, a photo-crosslinking resin, polyurethane foam, carbon fiber or nylon is used, the enzyme produced by the microorganism cannot be fixed although the microorganism itself can be fixed. Therefore, in this case, it is preferable that a support material which can adsorb and fix the enzyme such as activated carbon, charcoal and an ion axchange resin is present in combination.

It is advantageous for enhancing the efficiency of utilization of the enzyme or the microorganism that laccase and/or the microorganism is fixed and recycled. Waste water can be treated at a low cost when the enzyme produced by the microorganism can be continuously adsorbed with the support material at the outside of the microorganism while the microorganism is allowed to grow.

When laccase is supported on the support material, it is effective that the support material is placed into the culture of the microorganism producing laccase and the produced laccase is adsorbed and fix to the support material. In this case, since there is the possibility that the support material is contaminated with miscellaneous other microorganisms, it is preferable that the support material heated at about 100 to 120°C in advance for disinfection is used. From the same standpoint, it is preferable that the support material treated by heating in advance for disinfection is used when laccase is supported on the support material.

In the present invention, it is preferable that laccase is used in the form fixed to fine particles of a magnetic material. Since the activity of laccase can be maintained for a long time when laccase is fixed in this manner, the advantageous effect is exhibited in that the decomposition of the hardly decomposable substances contained in contaminated soil or water with laccase can be conducted with stability for a long time.

As the fine particles of a magnetic material for supporting laccase, fine particles of at least one magnetic material selected from maghemite, manganese ferrite, cobalt ferrite, nickel ferrite, zinc ferrite, magnetite and chromium dioxide can be preferably used. It is preferable that the diameter of the fine particles of the magnetic material is 100 μm or smaller and more preferably 10 μm or smaller since uniform dispersion of the fine particles into the contaminated soil or water can be achieved easily.

When laccase is supported on the fine particles of the magnetic material, it is effective that the fine particles of the magnetic material are placed into the culture of the microorganism producing laccase and laccase is adsorbed and fixed to the fine particles of the magnetic material. In this case, since there is the possibility that the fine particles of the magnetic material are contaminated with miscellaneous other microorganisms, it is preferable that the fine particles of the magnetic material treated by heating at about 100 to 120°C in advance for disinfection are used. When it is necessary that the fine particles of the magnetic material to which laccase is fixed in the culture of the microorganism be separated and recovered from the culture, the fine particles of the magnetic material can be separated and recovered easily by applying magnetic force.

When laccase fixed to the fine particles of the magnetic material is brought into contact with soil contaminated with the hardly decomposable harmful substances, it is preferable that the fine particles of the magnetic material to which laccase is fixed is mixed in an amount of 10 mg or more and more preferably 100 mg or more per 1 kg of the soil contaminated with the hardly decomposable harmful substances. The greater the amount of the fine particles of the magnetic materials, the greater the effect. However, even when the fine particles of the magnetic material is added in an amount exceeding 10 g per 1 kg of the contaminated soil, the effect is not exhibited to the degree expected from the added amount and the cost of the treatment of the contaminated soil increases. When the fine particles of the magnetic material is brought into contact with water contaminated with hardly decomposable harmful substances, it is preferable that the fine particles of the magnetic material to which laccase is fixed is mixed in an amount of 0.5 mg or more and more preferably 1 mg or more per 1 liter of the water contaminated with the hardly decomposable harmful substances. Even when the fine particles of a magnetic material is added in an amount exceeding 5 g per 1 liter of the contaminated water, the effect is not exhibited to the degree expected from the added amount and the cost of the treatment of the contaminated water increases.

It is preferable that the decomposition of the hardly decomposable harmful substances by bringing the above microorganism or laccase produced by the microorganism into contact with the substances is conducted at a reaction temperature in the range of 10 to 85°C and more preferably in the range of 20 to 85°C. When the reaction temperature is lower than 10°C, growth of the microorganism is slow in the water or the soil and the reaction of laccase is also slow. When the reaction temperature exceeds 85°C, the enzyme occasionally tends to be deactivated.

When the above reaction is conducted, it is preferable that the above hardly decomposable harmful substances are brought into contact with laccase or the microorganism producing laccase in the water or the soil. It is preferable that pH of the water or the soil containing the hardly decomposable harmful substances is adjusted in the range of 3 to 11 and more preferably in the range of 3.5 to 10.5. When pH is smaller than 3, the reaction of laccase is slow. When pH exceeds 11, the reaction of laccase is slow and laccase tends to be deactivated. Therefore, when the water or the soil has pH at the outside of the range of 3 to 11, it is preferable that pH is adjusted into the above range by adding an organic or inorganic acid or an alkaline substance so that the reaction of laccase takes place smoothly.

In the decomposition of the hardly decomposable harmful substances described above, a copper compound may further be added in combination with laccase or the microorganism. As the copper compound, for example, copper sulfate or copper chloride is preferably used. It is preferable that the concentration of the copper compound is adjusted in the range of 0.01 to 1 mmole/liter of the water or the soil containing the hardly decomposable harmful substances. By the addition of the copper compound, productivity and stability of laccase are improved.

When the treatments for decomposition of the hardly decomposable harmful substances described above are completed, the microorganism fixed to the support material, the enzyme fixed to the support material, the microorganism suspended in the medium and the nutrients are separated from the treated water by a filter or a centrifuge. Water obtained after the treatment can be released to the outside as the ordinary waste water. The microorganism fixed to the support material, the enzyme fixed to the support material, the microorganism suspended in the medium and the nutrients which have been separated above can be recycled and reused.

As described in detail in the above, in accordance with the present invention, the hardly decomposable harmful substances which are contained in exhaust gas, industrial waste water (waste liquid) and ash discharged from incineration apparatuses and manufacturing facilities into the natural environment and accumulated in water and soil contaminated with such substances can be effectively decomposed and converted into harmless substances by the microorganism producing laccase which exhibits excellent stability of production of the enzyme or laccase produced by the microorganism.

The present invention will be described more specifically with reference to examples in the following.

Example 1

(1) Culture of a microorganism producing laccase

Into an Erlenmeyer flask having an inner volume of 250 ml, 50 ml of a liquid culture medium prepared by dissolving 24 g of potato dextrose in 1 liter of city water was placed. After the flask was tightly sealed with a silicone stopper, the culture medium was disinfected at 121°C for 20 minutes.

The culture medium in the above flask was cooled to the room temperature and inoculated with Schizophyllum commune: IFO 6505 as the microorganism producing laccase in an amount of one platinum microspoonful. The liquid culture obtained by the inoculation of the microorganism producing laccase was left standing and cultured at 28°C for 14 days.

(2) Measurement of the laccase activity

To a solution containing 100 mmole of a malonic acid buffer solution adjusted at a pH of 4.5, the liquid culture obtained in (1) described above was added. To the resultant mixture, 2 mmole of 4-aminoantipyrin and 1 mmole of phenol were added and the reaction was allowed to proceed at 30°C.

When the reaction was completed, the absorbance of light having a wavelength of 500 nm was measured. The laccase activity was obtained from the difference in the absorbance before and after the reaction.

The laccase activity was expressed as follows: when the absorbance through an optical path having a length of 1 cm increased by 1 in one minute, the amount of laccase which gave rise to such an increase was expressed as 1 unit. As the result of the measurement, the laccase activity of the culture obtained in (1) described above was found to be 7.5 units/g of the dried product.

(3) Decomposition of dioxins

Into an Erlenmeyer flask having an inner volume of 250 ml, 50 ml of a liquid culture medium prepared by dissolving 24 g of potato dextrose in 1 liter of city water was placed.

To the resultant culture medium, 0.24 ml of a solution prepared by mixing the same amounts of a nonane solution containing 2,3,7,8-tetrachlorodibenzodioxin and a nonane solution containing 2,3,7,8-tetrachlorodibenzofuran each having a concentration of 100 μg/2.4 ml was added and, to the obtained mixture, 100 μg of polyoxyethylenesorbitan monooleate [manufactured by KAO ATLAS Co., Ltd.; TWEEN 80] as the surfactant was added. After the flask was tightly sealed with a silicone stopper, the culture medium was disinfected at 121°C for 20 minutes.

The culture medium prepared above was inoculated with Schizophyllum commune: IFO 6505 as the microorganism producing laccase in an amount of one platinum microspoonful. The liquid culture obtained by the inoculation of the microorganism producing laccase was left standing and cultured at 28°C for 20 days, during which the liquid culture was stirred slowly once in two days.

When the culture was completed, 50 ml of toluene was added to the flask and the decomposition of dioxins with laccase was stopped. The two types of dioxins added in the above were extracted and measured using the GC-MS.

For comparison, the same procedures as those described above were conducted without adding the microorganism producing laccase. The residual amount of a dioxin obtained in this run was set at the value of 100 and the rate of decomposition of the dioxin with Schizophyllum commune described above was calculated in accordance with the equation:

[(residual amount of a dioxin when no microorganisms were

added - residual amount of the dioxin when a microorganism

was added) / the residual amount of the dioxin when no

microorganisms were added] × 100

The rates of decomposition by Schizophyllum commune described above were found to be as follows: 2,3,7,8-tetrachlorodibenzodioxin: 72%; and 2,3,7,8-tetrachlorodibenzofuran: 81%.

Example 2

(1) Culture of a microorganism producing laccase

The same procedures as those conducted in Example 1 (1) were conducted except that Trametes versicolor: IFO 4941 was used as the microorganism producing laccase.

(2) Measurement of the laccase activity

The laccase activity was obtained in accordance with the same procedures as those conducted in Example 1 (2) except that the liquid culture obtained in (1) described above was used. As the result, the laccase activity of the culture obtained in (1) described above was found to be 12.4 units / g of the dried product.

(3) Decomposition of dioxins

The same procedures as those conducted in Example 1 (3) were conducted except that Trametes versicolor: IFO 4941 was used as the microorganism producing laccase.

As the result, the rates of decomposition by Trametes versicolor described above were found to be as follows: 2,3,7,8-tetrachloro-dibenzodioxin: 78%; and 2,3,7,8-tetrachlorodibenzofuran: 88%.

Example 3

(1) Culture of a microorganism producing laccase

The same procedures as those conducted in Example 1 (1) were conducted except that Trametes versicolor: IFO 9791 was used as the microorganism producing laccase.

(2) Measurement of the laccase activity

The laccase activity was obtained in accordance with the same procedures as those conducted in Example 1 (2) except that the liquid culture obtained in (1) described above was used. As the result, the laccase activity of the culture obtained in (1) described above was found to be 10.2 units / g of the dried product.

(3) Decomposition of dioxins

The same procedures as those conducted in Example 1 (3) were conducted except that Trametes versicolor: IFO 9791 was used as the microorganism producing laccase.
As the result, the rates of decomposition by Trametes versicolor described above were found to be as follows: 2,3,7,8-tetrachloro-dibenzodioxin: 79%; and 2,3,7,8-tetrachlorodibenzofuran: 86%.

Example 4

(1) Culture of a microorganism producing laccase

The same procedures as those conducted in Example 1 (1) were conducted except that Trametes versicolor: IFO 30340 was used as the microorganism producing laccase.

(2) Measurement of the laccase activity

The laccase activity was obtained in accordance with the same procedures as those conducted in Example 1 (2) except that the liquid culture obtained in (1) described above was used. As the result, the laccase activity of the culture obtained in (1) described above was found to be 13.9 units / g of the dried product.

(3) Decomposition of dioxins

The same procedures as those conducted in Example 1 (3) were conducted except that Trametes versicolor: IFO 30340 was used as the microorganism producing laccase.
As the result, the rates of decomposition by Trametes versicolor described above were found to be as follows: 2,3,7,8-tetrachloro-dibenzodioxin: 82%; and 2,3,7,8-tetrachlorodibenzofuran: 91%.

Example 5

(1) Culture of a microorganism producing laccase

The same procedures as those conducted in Example 1 (1) were conducted except that Trametes versicolor: IFO 30388 was used as the microorganism producing laccase.

(2) Measurement of the laccase activity

The laccase activity was obtained in accordance with the same procedures as those conducted in Example 1 (2) except that the liquid culture obtained in (1) described above was used. As the result, the laccase activity of the culture obtained in (1) described above was found to be 9.2 units / g of the dried product.

(3) Decomposition of dioxins

The same procedures as those conducted in Example 1 (3) were conducted except that Trametes versicolor: IFO 30388 was used as the microorganism producing laccase.
As the result, the rates of decomposition by Trametes versicolor described above were found to be as follows: 2,3,7,8-tetrachloro-dibenzodioxin: 74%; and 2,3,7,8-tetrachlorodibenzofuran: 79%.

Example 6

(1) Culture of a microorganism producing laccase

The same procedures as those conducted in Example 1 (1) were conducted except that Pleurotus pulmonaris:

IFO 31345 was used as the microorganism producing laccase.

(2) Measurement of the laccase activity

The laccase activity was obtained in accordance with the same procedures as those conducted in Example 1 (2) except that the liquid culture obtained in (1) described above was used. As the result, the laccase activity of the culture obtained in (1) described above was found to be 9.2 units / g of the dried product.

(3) Decomposition of dioxins

The same procedures as those conducted in Example 1 (3) were conducted except that Pleurotus pulmonaris: IFO 31345 was used as the microorganism producing laccase.
As the result, the rates of decomposition by Pleurotus pulmonaris described above were found to be as follows: 2,3,7,8-tetrachlorodibenzodioxin: 68%; and 2,3,7,8-tetrachlorodibenzofuran: 77%.
The results of Examples 1 to 6 are shown together in Table 1.

Table 1

|  |  | Microorganism | Laccase activity | Rate of decomposition of 2,3,7,8-tetrachlorodibenzodioxin | Rate of decomposition 2,3,7,8-tetrachlorodibenzofuran |
|---|---|---|---|---|---|
|  |  |  | (u/g of dried product) | (%) | (%) |
|  | Example 1 | Schizophyllum commune IFO-6505 | 7.5 | 72 | 81 |
|  | Example 2 | Trametes versicolor IFO-4941 | 12.4 | 78 | 88 |
|  | Example 3 | Trametes versicolor IFO-9791 | 10.2 | 79 | 86 |
|  | Example 4 | Trametes versicolor IFO-30340 | 13.9 | 82 | 91 |
|  | Example 6 | Trametes versicolor IFO-30388 | 9.2 | 74 | 79 |
|  | Example 6 | Pleurotus pulmonaris IFO-31345 | 9.2 | 68 | 77 |

Examples 7 to 10

Into an Erlenmeyer flask having an inner volume of 600 ml, 100 ml of an oat meal culture medium was placed. After the flask was tightly sealed with a silicone stopper, the culture medium was disinfected at 121°C for 20 minutes.
The culture medium in the above flask was cooled to the room temperature and inoculated with Pycnoporus cinnabarinus: IFO 4923 as the microorganism producing laccase in an amount of one platinum microspoonful. The liquid culture obtained by the inoculation of the microorganism producing laccase was left standing and cultured at 27°C for one week.
To the resultant culture medium, 1 ml of an acetone solution of 2,3,7,8-tetrachlorodibenzodioxin (containing 5 ng; Example 7), 3,3',4,4',5,5'-copolanar PCB (containing 5 ng; Example 8), bisphenol A (containing 5 ng; Example 9) or pentachlorophenol (containing 1 mg; Example 10) was added as the hardly decomposable harmful substance (each solution having a pH of 7.5). After being shaken vigorously for 3 minutes, the obtained mixture was again left standing at 27°C for one week.
Then, the entire amount of the hardly decomposable harmful substance was extracted and measured using the GC-MS.

For comparison, the same procedures as those described above were conducted without adding the microorganism producing laccase. The residual amount of the dioxin obtained in this run was set at the value of 100 and the rate of decomposition of the dioxin was calculated in accordance with the same procedure as that in Example 1. The rates of decomposition were found to be as follows: 2,3,7,8-tetrachloro-dibenzodioxin: 92%; 3,3',4,4',5,5'-copolanar PCB: 76%; bisphenol A: 96%; and pentachlorophenol: 84%.

Examples 11 to 14

A microorganism producing laccase was cultured and the rates of decomposition of hardly decomposable harmful substances were measured in accordance with the same procedures as those conducted in Example 7 except that Rhizoctonia praticola: ATCC 16129 was used as the microorganism producing laccase. The rates of decomposition were found to be as follows: 2,3,7,8-tetrachlorodibenzodioxin: 96%; 3,3',4,4',5,5'-copolanar PCB: 86%; bisphenol A: 97%; and pentachlorophenol: 75%.

Examples 15 to 18

A microorganism producing laccase was cultured and the rates of decomposition of hardly decomposable harmful substances were measured in accordance with the same procedures as those conducted in Example 7 except that Lentinus edodes: IFO 31864 was used as the microorganism producing laccase. The rates of decomposition were found to be as follows: 2,3,7,8-tetrachlorodibenzodioxin: 72%; 3,3',4,4',5,5'-copolanar PCB: 78%; bisphenol A: 92%; and pentachlorophenol: 87%.

Examples 19 to 22

A microorganism producing laccase was cultured and the rates of decomposition of hardly decomposable harmful substances were measured in accordance with the same procedures as those conducted in Example 7 except that Merulius tremellosus: IFO 30385 was used as the microorganism producing laccase. The rates of decomposition were found to be as follows: 2,3,7,8-tetrachlorodibenzodioxin: 77%; 3,3',4,4',5,5'-copolanar PCB: 68%; biaphenol A: 94%; and pentachlorophenol: 86%.

The results in Examples 7 to 22 are shown together in Table 2.

Table 2

| | | Microorganism | Hardly decomposable harmful substance | Rate of decomposition (%) |
|---|---|---|---|---|
| | Example 7 | Pycnoporus cinnabarinus IFO 4923 | 2,3,7,8-tetrachlorodibenzodioxin | 92 |
| | Example 8 | Pycnoporus cinnabarinus IFO 4923 | 3,3',4,4',5,5'-coplanar PCB | 76 |
| | Example 9 | Pycnoporus cinnabarinus IFO 4923 | bisphenol A | 96 |
| | Example 10 | Pycnoporus cinnabarinus IFO 4923 | pentachlorophenol | 84 |
| | Example 11 | Rhizoctonia praticola ATCC 16129 | 2,3,7,8-tetrachlorodibenzodioxin | 96 |
| | Example 12 | Rhizoctonia praticola ATCC 16129 | 3,3',4,4',5,5'-coplanar PCB | 86 |
| | Example 13 | Rhizoctonia praticola ATCC 16129 | bisphenol A | 97 |
| | Example 14 | Rhizoctonia praticola ATCC 16129 | pentachlorophenol | 75 |
| | Example 15 | Lentinus edodes IFO 31864 | 2,3,7,8-tetrachlorodibenzodioxin | 72 |
| | Example 16 | Lentinus edodes IFO 31864 | 3,3',4,4',5,5'-coplanar PCB | 78 |

Table 2   (continued)

|  | Microorganism | Hardly decomposable harmful substance | Rate of decomposition (%) |
|---|---|---|---|
| Example 17 | Lentinus edodes IFO 31864 | bisphenol A | 92 |
| Example 18 | Lentinus edodes IFO 31864 | pentachlorophenol | 87 |
| Example 19 | Merulius tremellosus IFO 30385 | 2,3,7,8-tetrachlorodibenzodioxin | 77 |
| Example 20 | Merulius tremellosus IFO 30385 | 3,3',4,4',5,5'-coplanar PCB | 68 |
| Example 21 | Merulius tremellosus IFO 30385 | bisphenol A | 94 |
| Example 22 | Merulius tremellosus IFO 30385 | pentachlorophenol | 86 |

Example 23

(1) Preparation of a liquid of the laccase enzyme

Into each of 6 Erlenmeyer flasks having an inner volume of 500 ml, 1.5 g of corn bran, 1.5 g of rice bran, 0.58 g of saw dust of Japanese chestnut oak and 0.5 mg of copper sulfate pentahydrate were placed and then 100 ml of city water was added.

The flasks were tightly sealed and placed in an autoclave and the culture media prepared above were disinfected at 121°C for 20 minutes.

The culture media were cooled to the room temperature and inoculated with Schizophyllum commune: IFO 6505 as the microorganism producing laccase in an amount of one platinum microspoonful. Then, the microorganism was cultured at 25°C for 3 days while being shaken at a rotation speed of 110 rpm and then at 25°C for 7 days while being left standing.

When the culture was completed, the cultured products in the 5 flasks were collected. The collected culture products were then treated by a centrifuge under 11.00 G and a supernatant liquid was obtained. The obtained supernatant liquid exhibited a laccase activity of 12.0 units/g and no activity was found with respect to lignin peroxidase and manganese peroxidase.

To the obtained supernatant liquid, 1.0 ml of a solution of benzalkonium chloride [manufactured by NIPPON SEIYAKU Co., Ltd.] having a concentration of 10% by weight/volume was added to prevent putrefaction. City water was added to the resultant mixture to adjust the total volume to 500 ml and a liquid of the laccase enzyme was prepared.

(2) Preparation of water containing dioxins

To 200 g of ash of city garbage containing dioxins which was taken from an incineration plant of the fluidized bed type for city garbage, 1 liter of hydrochloric acid having a concentration of 2 N was added and the resultant mixture was left standing for 2 hours.

The obtained fluid was filtered under suction. To the supernatant liquid obtained after the filtration, 1 liter of dichloromethane was added and the resultant mixture was treated by liquid-liquid extraction at the room temperature for 2 hours. To the ash separated by the filtration under suction, 1 liter of toluene was added and the obtained fluid was treated by extraction at the room temperature for 48 hours under stirring.

The liquid obtained by the extractioa with dichloromethane and the liquid obtained by the extraction with toluene were combined. The combined liquid was dried with anhydrous sodium sulfate and concentrated under a reduced pressure to obtain a solid product. To the obtained solid product, 5 ml of polyoxyethylene sorbitan monooleate [manufactured by KAO ATLAS Co., Ltd.; TWEEN 80] as the surfactant and then 1 liter of city water were added and mixed together. Thus, water containing dioxins was prepared.

(3) Decomposition of dioxins

Into an Erlenmeyer flask having an inner volume of 250 ml, 25 ml of the water containing dioxins prepared in (2) described above was placed and pH of the water containing dioxins was adjusted to 3.5 by adding hydrochloric acid having a concentration of 1 N.

To the water containing dioxins prepared above, 25 ml of the liquid of the laccase enzyme prepared in (1) described above was added. The resultant mixture was stirred at 50°C for 3 hours and decomposition of dioxins with the laccase enzyme was allowed to proceed.

When the reaction was completed, the reaction was completely terminated by adding dichloromethane. The residual amount of dioxins in the reaction liquid was measured and the rate of decomposition of dioxins was calculated.

For the calculation of the rate of decomposition of dioxins, the content of the dioxins obtained at a pH of 7.0 in the absence of the laccase enzyme was set at the value of 100. The rate of decomposition of dioxins was calculated as follows:

$$[(\text{content without enzyme - content under addition of}$$

$$\text{enzyme}) / \text{content without enzyme}] \times 100$$

As the result, the rate of decomposition of dioxins by the above reaction was found to be 38%.

Examples 24 to 28

The decomposition of dioxins by the laccase enzyme was conducted in accordance with the same procedures as those conducted in Example 23 (3) except that pH of the water containing dioxins was adjusted as follows: 4.5 in Example 24; 6.5 in Example 25; 7.0 in Example 26; 9.0 in Example 27; and 10.0 in Example 28. In Examples 27 and 28, pH of the water containing dioxins was adjusted by adding an aqueous solution of sodium hydroxide having a concentration of 1 N.

The results in Examples 23 to 28 are shown in Table 3.

Table 3

| | Microorganism | pH in reaction liquid | Rate of decomposition of dioxins (%) |
|---|---|---|---|
| Example 23 | Schizophyllum commune: IFO 6505 | 3.5 | 38 |
| Example 24 | Schizophyllum commune: IFO 6505 | 4.5 | 74 |
| Example 25 | Schizophyillum commune: IFO 6505 | 5.5 | 76 |
| Example 26 | Schizophyllum commune: IFO 6505 | 7.0 | 72 |
| Example 27 | Schizophyllum commune: IFO 6505 | 9.0 | 58 |
| Example 28 | Schizophyllum commune: IFO 6505 | 10.0 | 41 |

Example 29 to 34

A liquid of the laccase enzyme was prepared in accordance with the same procedures as those conducted in Example 23 (1) except that Trametes versicolor: IFO 30340 was used as the microorganism producing laccase.

Decomposition of dioxins by the laccase enzyme was conducted in accordance with the same procedures as those conducted in Example 23 (3) except that, using water containing dioxins prepared in accordance with the same procedures as those conducted in Example 23 (2), pH of the water was adjusted with hydrochloric acid having a concentration of 1 N or an aqueous solution of sodium hydroxide having a concentration of 1 N as follows: 3.5 in Example 29; 5.0 in Example 30; 6.0 in Example 31; 7.0 in Example 32; 8.5 in Example 33; and 9.5 in Example 34.

The results are shown in Table 4.

Table 4

| | Microorganism | pH in reaction liquid | Rate of decomposition of dioxins (%) |
|---|---|---|---|
| Example 29 | Trametes versicolor: IFO 30340 | 3.5 | 42 |
| Example 30 | Trametes versicolor: IFO 30340 | 5.0 | 78 |
| Example 31 | Trametes versicolor; IFO 30340 | 6.0 | 82 |
| Example 32 | Trametes versicolor: IFO 30340 | 7,0 | 69 |
| Example 33 | Trametes versicolor: IFO 30340 | 8.5 | 62 |

Table 4   (continued)

|  | Microorganism | pH in reaction liquid | Rate of decomposition of dioxins (%) |
|---|---|---|---|
| Example 34 | Trametes versicolor: IFO 30340 | 9.5 | 60 |

Example 35 to 40

A liquid of the laccase enzyme was prepared in accordance with the same procedures as those conducted in Example 23 (1) except that Pleurotus pulmonaris: IFO 31345 was used as the microorganism producing laccase.

Decomposition of dioxins by the laccase enzyme was conducted in accordance with the same procedures as those conducted in Example 23 (3) except that, using water containing dioxins prepared in accordance with the same procedures as those conducted in Example 23 (2), pH of the water was adjusted with hydrochloric acid having a concentration of 1 N or an aqueous solution of sodium hydroxide having a concentration of 1 N as follows: 3.5 in Example 35; 5.0 in Example 36; 6.0 in Example 36; 7.0 in Example 3T; 8.0 in Example 38; 9.0 in Example 39; and 10.0 in Example 40.

The results are shown in Table 5.

Table 5

|  | Microorganism | pH in reaction liquid | Rate of decomposition of dioxins (%) |
|---|---|---|---|
| Example 35 | Pleurotus pulmonaris: IFO 31345 | 3.5 | 35 |
| Example 36 | Pleurotus pulmonaris: IFO 31345 | 5.0 | 78 |
| Example 37 | Pleurotus pulmonaris: IFO 31345 | 7.0 | 72 |
| Example 38 | Pleurotus pulmonaris: IFO 31345 | 8.0 | 64 |
| Example 39 | Pleurotus pulmonaris: IFO 31345 | 9.0 | 58 |
| Example 40 | Pleurotus pulmonaris: IFO 31345 | 10.0 | 46 |

Examples 41 to 67

Into 1 liter of water, 25 g of oat meal, 1 g of peptone and 10 g of sucrose as the components of a culture medium were suspended. While the suspension was stirred, 100 ml of the suspension was placed into an Erlenmeyer flask having an inner volume of 500 ml. This operation was repeated and 27 Erlenmeyer flasks containing the aqueous suspension of the culture medium were prepared. To some of the Erlenmeyer flasks containing the aqueous suspension of the culture medium, 1 g each of an ion exchange resin [manufactured by SUMITOMO KAGAKU KOGYO Co., Ltd.; XAD874] was added.

The aqueous suspensions of the culture medium in the Erlenmeyer flasks were disinfected at 121°C for 20 minutes. The obtained aqueous suspensions of the culture medium in the Erlenmeyer flasks were inoculated with various types of microorganisms shown in Table 6 and cultured at 26°C for 2 weeks.

After the culture for 2 weeks, various hardly decomposable harmful substances shown in Table 6 were added to the aqueous suspensions of the liquid culture in the Erlenmeyer flasks. The obtained mixtures were shaken at 32°C for 24 hours so that the hardly decomposable harmful substances were brought into contact with the microorganisms and decomposition of the hardly decomposable harmful substances was conducted. For the addition of the hardly decomposable harmful substances, the hardly decomposable harmful substances were dissolved into acetone in specific amounts.

The residual amounts of the hardly decomposable harmful substances in the products of the decomposition were measured and the rates of decomposition were obtained. The results are shown in Table 6.

Table 6 - 1

| Example | Microorganism | Ion exchange | Hardly decomposable harmful substance | | Rate of decomposition (%) |
|---|---|---|---|---|---|
|  |  | resin | compound | amount (mg) |  |
| 41 | Trametes versicolor IFO 9791 | used | p-tert-butylphenol | 2.3 | 98 |

Table 6 - 1   (continued)

| Example | Microorganism | Ion exchange | Hardly decomposable harmful substance | | Rate of decomposition (%) |
|---|---|---|---|---|---|
| | | resin | compound | amount (mg) | |
| 42 | Trametes versicolor IFO 9791 | none | p-tert-butylphenol | 2.3 | 92 |
| 43 | Trametes versicolor IFO 9791 | used | nonylphenol | 1.9 | 94 |
| 44 | Trametes versicolor IFO 9791 | none | nonylphenol | 1.9 | 89 |
| 45 | Trametes versicolor IFO 9791 | used | 4-(1-propenyl)-phenol | 2.3 | 99 |
| 46 | Trametes versicolor IFO 9791 | none | 4-(1-propenyl)-phenol | 2.3 | 97 |
| 47 | Trametes veraicolor IFO 9791 | used | butyl phthalate | 1.1 | 94 |
| 48 | Trametes versicolor IFO 9791 | none | butyl phthalate | 1.1 | 88 |
| 49 | Trametes consols IFO 8348 | none | bisphenol A | 2.4 | 91 |
| 50 | Schizophyllum commune IFO 6505 | used | octylphenol | 1.6 | 93 |
| 51 | Schizophyllum commune IFO 6505 | none | octylphenol | 1.6 | 88 |
| 52 | Schizophyllum commune IFO 6505 | used | pentylphenol | 1.2 | 83 |
| 53 | Schizophyllum commune IFO 6505 | none | pentylphenol | 1.2 | 71 |
| 54 | Schizophyllum commune IFO 6505 | used | bisphenol A | 2.4 | 94 |
| 55 | Schizophyllum commune IFO 6505 | none | bisphenol A | 2.4 | 95 |

Table 6 - 2

| Example | Microorganism | Ion exchange | Hardly decomposable harmful substance | | Rate of decomposition (%) |
|---|---|---|---|---|---|
| | | resin | compound | amount (mg) | |
| 56 | Schizophyllum commune IFO 6606 | used | butyl benzyl phthalate | 1.0 | 99 |
| 67 | Schizophyllum commune IFO 6505 | used | butyl benzyl phthalate | 1.0 | 99 |

Table 6 - 2   (continued)

| Example | Microorganism | Ion exchange | Hardly decomposable harmful substance | | Rate of decomposition (%) |
|---|---|---|---|---|---|
| | | resin | compound | amount (mg) | |
| 58 | Pleurotus ostoreatus IFO 30106 | none | bisphenol A | 2.4 | 81 |
| 59 | Pleurotus ostoreatus IFO 30106 | none | bisphenol A | 2.4 | 68 |
| 60 | Favolus arcularius IFO 4969 | none | bisphenol A | 2.4 | 96 |
| 61 | Pholiota adibosa IFO 30359 | none | bisphenol A | 2.4 | 82 |
| 62 | Lyophyllum decastes IFO 31167 | none | bisphenol A | 2.4 | 73 |
| 63 | Pycnoporus cinnabarinus IFO 4923 | none | biaphenol A | 2.4 | 88 |
| 64 | Agaricus bisporus IFO 30774 | none | bisphenol A | 2.4 | 96 |
| 65 | Daedaleopsis stirasina IFO 4910 | none | bisphenol A | 2.4 | 98 |
| 66 | Ganoderma lucidam IFO 31863 | none | bisphenol A | 2.4 | 79 |
| 67 | Auricularia auricladude IFO 5949 | none | bisphenol A | 2.4 | 86 |

Example 68

Into a separation funnel having a volume of 1 liter, 100 ml of a 10 mmole buffer solution of phosphoric acid (pH: 7.4) was placed. After 1,1,2-trichloroethylene was added to the buffer solution in an amount such that the concentration was adjusted to 20 ppm, the obtained mixture was shaken for 1 hour. Separately, Trametes versicolor: IFO 4941 was cultured in a liquid culture medium of polydextrose left standing at 27°C for 2 weeks and the obtained liquid culture was treated by a centrifuge. The supernatant liquid obtained by the treatment in an amount of 100 ml was added to the above separation funnel. After the gas phase of the separation funnel was purged with pure oxygen, the separation funnel was shaken in a chamber kept at 40°C for 4 hours.

Then, the content of 1,1,2-trichloroethylene was measured using the gas chromatography and the mass analysis (GC-MS).

The control run was conducted in accordance with the same procedures as those conducted above except that, in place of the supernatant liquid of the liquid culture, 100 ml of city water was added to the above water containing 1,1,2-trichloroethylene. The fraction of decomposition of 1,1,2-trichloroethylene was calculated based on the result of the control run. The result is shown in Table 7.

Example 69

The same procedures as those conducted in Example 68 were conducted except that 1,1,1-trichloroethylene was used in place of 1,1,2-trichloroethylene and the rate of decomposition of 1,1,1-trichloroethylene was measured. The result is shown in Table 7.

Example 70

The decomposition of 1,1,2-trichloroethylene was conducted in accordance with the same procedures as those conducted in Example 68 except that Schizophyllum commune: IFO 6505 was used in place of Trametes versicolor: IFO 4941 and the rate of decomposition of 1,1,2-trichloroethylene was measured. The result is shown in Table 7.

Example 71

In city water, 5 g of peptone, 20 g of sucrose and 20 g of soluble starch per 1 liter of water were suspended. Into an Erlenmeyer flask having an inner volume of 500 ml and equipped with a ground glass stopper, 100 ml of the suspension obtained above was placed. After the flask was tightly sealed with a silicone stopper, the content of the flask was disinfected at 121°C for 20 minutes. The culture medium in the flask was inoculated with Rhizoctonia praticola: ATCC 16129 in an amount of one platinum microspoonful and the microorganism was cultured at 27°C for 14 days. When the culture was completed, the flask was cooled in a shaking bath kept at 4°C and 10 microliters of 1,1,1-trichloroethylene was added to the liquid culture. The flask was sealed with the glass stopper in place of the silicone stopper and shaken at 4°C for 10 minutes. The content of 1,1,1-trichloroethylene was measured using the gas chromatography-mass analysis (GC-MS). The obtained value was used as the initial value.

Immediately after the above operation, the flask was shaken in a bath kept at 40°C for 4 hours and the content of 1,1,1-trichloroethylene was measured using the gas chromatography-mass analysis. The results are shown in Table 7.

Example 72

The same procedures as those conducted in Example 71 were conducted except that Funalia trogii: ATCC 200800 was used in place of Rhizoctonia praticola: ATCC 16129 and 1,1,2-trichloroethylene was decomposed in place of 1,1,1-trichloroethylene and the rate of decomposition of 1,1,2-trichloroethylene was measured. The result is shown in Table 7.

Example 73

Into each of 5 Erlenmeyer flasks having an inner volume of 500 ml, 1.5 g of corn bran, 1.5 g of rice bran, 0.58 g of saw dust of Japanese chestnut oak and 0.5 mg of copper sulfate pentahydrate were placed and then 100 ml of city water was added.
The flasks were tightly sealed and placed in an autoclave and the culture media prepared above were disinfected at 121°C for 20 minutes.
The culture media were cooled to the room temperature and inoculated with Trametes versicolor: IFO 4941 as the microorganism producing laccase in an amount of one platinum microspoonful for each culture medium. Then, the microorganism was cultured at 25°C for 3 days while being shaken at a rotation speed of 110 rpm and then at 25°C for 10 days while being left standing.
When the culture was completed, the culture products in the 5 flasks were then treated by a centrifuge and a supernatant liquid was obtained. To the obtained supernatant liquid, 1-hydroxybenzotriazole as the mediator was added in an amount of 1 mmole. City water was added to the resultant mixture so that the total volume was adjusted to 500 ml and a liquid of the laccase enzyme was prepared.
Into a separation funnel having a volume of 1 liter, 100 ml of a 10 mmole buffer solution of phosphoric acid (pH: 8.5) was placed. After the gas phase was purged with pure oxygen, dichloromethane was added so that the concentration was adjusted to 50 ppm and the obtained mixture was shaken for 10 minutes.
To the water containing dichloromethane prepared above, 1 ml of the liquid of the laccase enzyme prepared above was added. The flask was then shaken in a bath kept at 40°C for 4 hours and decomposition of dichloromethane with the laccase enzyme was conducted.
When the reaction was completed, the content of dichloromethane residual in the reaction liquid was measured using the gas chromatography-mass analysis (GC-MS) and the rate of decomposition of dichloromethane was calculated.
In the above calculation, the result obtained by adding, in place of the liquid of the laccase enzyme, city water to water containing dichloromethane was used as the control. The result is shown in Table 7.

Example 74

The decomposition of 1,1,1-trichloroethylene was conducted in accordance with the same procedures as those conducted in Example 73 except that 1,1,1-trichloroethylene was used in place of dichloromethane and the rate of decomposition of 1,1,1-trichloroethylene was measured. The result is shown in Table 7.

Table 7

| | Microorganism | Hardly decomposable harmful substance | Rate of decomposition (%) |
|---|---|---|---|
| Example 68 | Trametes versicolor IFO 4941 | 1,1,2-trichloroethylene | 49 |
| Example 69 | Trametes versicolor IFO 4941 | 1,1,1-trichloroethylene | 42 |
| Example 70 | Schizophyllum commune IFO 6505 | 1,1,2-trichloroethylene | 38 |
| Example 71 | Rhizoctonia praticola ATCC 16129 | 1,1,1-trichloroethylene | 78 |
| Example 72 | Funalia trogii ATCC 200800 | 1,1,2-trichloroethylene | 53 |
| Example 73 | Trametes versicolor IFO 4941 | dichloromethane | 28 |
| Example 74 | Trametes versicolor IFO 4941 | 1,1,1-trichloroethylene | 69 |

Example 75

Waste water formed by cleaning smoke in an incineration plant (21,000 to 24,000 pg-TEQ/liter of the waste water formed by cleaning) was neutralized with sodium hydroxide and used as contaminated water.

A polyurethane foam of a cube of 2 cm was impregnated with a liquid culture medium of potato dextrose. Into an incubator made of stainless steel and equipped with an aseptic filter, 200 pieces of the polyurethane foam prepared as described above were placed and disinfected at 121°C for 20 minutes. Into glass dishes having a diameter of 19 cm, the polyurethane foams were placed in a manner such that each dish contained 10 pieces of the polyurethane foam and inoculated with the. seeds of Trametes versicolor: IFO 9791 or Schizophyllum commune: IFO 6505. The microorganisms were cultured at 27°C and seed beds were prepared.

Continuous decomposition of waste water

To a double tube column having a glass inner tube having a diameter of 7 cm inside an outer tube having a diameter of 10 cm (the length of the outer tube: 25 cm; the length of the inner tube: 12 cm), three lines, which were an inlet for waste water, an inlet for the air and a line for addition of nutrients, were attached at lower portions and other attachments such as tubes of stainless steel were attached. The entire apparatus was disinfected in an autoclave at 121°C. Into the inner tube of the double tube column, 12 seed beds of polyurethane prepared above were placed. At the same time, 10 g of granular activated carbon having an average diameter of 2 mm which had been disinfected by heating in advance was placed at the bottom portion of the double tube column.

To prevent contamination with miscellaneous microorganisms, a filter of 0.4 μm was placed in the passage of the air and a removable cap made of a ground glass for releasing a gas was attached at an upper portion of the double tube. Waste water and nutrients which had been disinfected were supplied quantitatively using a micropump.

Two apparatuses described above were connected in series and waste water and the air were taken out of the second apparatus. The entire apparatus was placed in a chamber kept at 27°C and operated continuously. For the operation, waste water formed by cleaning smoke containing 21,000 to 24,000 pg-TEQ/liter was used as the contaminated water. The operation was conducted under the conditions of a flow rate of the waste water of 1 liter/day, a flow rate of the nutrients of 50 ml/day and a flow rate of the air of 50 ml/minute.

The composition of the nutrients was as follows:

| Composition of the nutrients | |
|---|---|
| Carboxymethylcellulose | 10 g |
| Soluble starch | 20 g |
| Peptone | 10 g |
| $KH_2PO_4$ | 2 g |
| $NaHPO_4$ | 1 g |

(continued)

| Composition of the nutrients | |
|---|---|
| MgSO4 | 0.2 g |
| City water | 1 liter |

The experiment was conducted using three sets of the same apparatuses. The waste water was stored for 3 days and used for extraction of dioxins. After one month, the seed beds, the activated carbon, the glass containers and the silicone tubes were separately treated by washing and extraction with toluene and the amount of dioxins was calculated. The determination of the dioxins was conducted in accordance with the conventional method of the gas chromatography-mass analysis. The rate of decomposition of dioxins was calculated based on the obtained results. The results are shown in the following.

| Microorganism | Activated carbon | Rate of decomposition of dioxins (TEQ %) |
|---|---|---|
| Trametes versicolor IFO 9791 | used | 93 |
| Schizophyllum commune IFO 6505 | used | 95 |

Example 76

Into city water, 25 g of oat meal, 10 g of polypeptone, 1.5 g of $KH_2PO4$, 0.5 g of $MgSO_4 \cdot 7H_2O$, 2.0 g of thiamine hydrochloride and 20 mg of $CuSO_4$ per 1 liter of water were dissolved as the components of a culture medium. pH of the obtained solution was adjusted to 5.6 with hydrochloric acid having a concentration of 0.1 N and a culture medium was prepared.

Into an Erlenmeyer flask having an inner volume of 500 ml, 100 ml of the culture medium prepared above was placed and disinfected at 121°C for 15 minutes. The disinfected culture medium was inoculated with Trametes versicolor: IFO 4937 in an amount of one platinum spoonful and left standing for culture at 30°C for 14 days.

(2) Measurement of the laccase activity

Using the liquid culture obtained in (1) described above, the activity of laccase in the liquid culture was measured and found to be 12.4 nkat/ml.

(3) Evaluation of stability of the enzyme

To the liquid culture obtained in (1) described above, 2.5 g of fine particles of maghemite which had been disinfected by drying and heating at 130°C for 24 hours was aseptically added. The resultant mixture was immediately treated by stirring at 180 rpm for 1 hour and the enzyme was adsorbed and fixed to the fine particles of maghemite.

Separately, into a beaker having an inner volume of 2 liters, 280 g of black volcanic soil without disinfection (the content of water: 14% by mass) was placed. The liquid containing the enzyme adsorbed to the fine particles of maghemite was added to the beaker and sufficiently mixed by a spatula. Water was added to the obtained mixture and the weight of the entire mixture was adjusted to 400 g.

After the opening was covered with an aluminum foil, the beaker containing the soil was placed in a bath kept at 25°C and the soil in the beaker was slowly stirred by a spatula once in a day. When the amount of water vaporized during the stirring was much, city water in an amount corresponding to the amount lost by vaporization was supplemented.

Samples were taken from the soil at time intervals. The laccase activity in the soil taken as the sample was measured and the stability of the enzyme was evaluated. Five samples of the soil were taken at 4, 24, 48, 72 and 168 hours after the fine particles of maghemite having the fixed enzyme was added to the soil. The results are shown in Table 8.

Table 8

| addition of fine particles of magnetic material | Time to measurement after addition of fine particles of magnetic material (hr) | Laccase activity (kat/g soil) |
|---|---|---|
| added | 4 | 12.0 |
| added | 24 | 12.2 |
| added | 48 | 11.8 |
| added | 72 | 11.6 |
| added | 168 | 10.4 |

(4) Cleaning of soil contaminated with chlorinated dioxins

An area around an incineration plant for city garbage built at a forested mountainous location was selected. In the inclined area described above where weeds grew, a sample of soil was taken from a portion of the land ranging from the surface to a depth of 20 cm as the sample of soil contaminated with chlorinated dioxins. The soil was treated by a metal screen having an opening of 1 cm so that miscellaneous foreign materials such as stones were removed and the obtained soil was used as a sample of the soil contaminated with chlorinated dioxins (the average content of water: 21% by mass).

The sample of the soil contaminated with chlorinated dioxins was analyzed with respect to isomers of chlorinated dioxins in accordance with the temporary manual for investigation of soil with respect to chlorinated dioxins which was prepared by the Environmental Protection Agency of Japan. As the result of the analysis, it was confirmed that 2,3,7,8-tetrachlorodibenzo-p-dioxin, 1,2,3,7,8-pentachlorodibenzo-p-dioxin, 1,2,3,4,7,8-bexachlorodibenzo-p-dioxin, 1,2,3,6,7,8-hexachlorodibenzo-p-dioxin, 1,2,3,7,8,9-hexachlorodibenzo-p-dioxin, 1,2,3,4,6,7,8-heptachloro-dibenzo-p-dioxin, 1,2,3,4,6,7,8,9-octachlorodibenzo-p-dioxin, 2,3,7,8-tetrachlorodibenzofuran, 1,2,3,7,8-pentachlorodibenzofuran, 2,3,4,7,8-pentachlorodibenzofuran, 1,2,3,4,7,8-hexachlorodibenzofuran, 1,2,3,6,7,8-hexachlorodibenzofuran, 1,2,3,7,8,9-hexachlorodibenzofuran, 2,3,4,6,7,8-hexachlorodibenzofuran, 1,2,3,4,6,7,8-heptachlorodibeuzofuran, 1,2,3,4,7,8,9-heptachlorodibenzofuran and 1,2,3,4,6,7,8,9-octachloro-dibenzofuran were present as the isomers of chlorinated dioxins. The content of each chlorinated dioxin was calculated as the toxicity equivalent (TEQ) corresponding to the activity of 2,3,7,8-tetrachlorodibenzo-p-dioxin. The value of TEQ of the entire chlorinated dioxins present in the above contaminated soil was 1,860 picograms/g of the soil.

The soil contaminated with chlorinated dioxins in an amount of 10 kg was disinfected by heating at 75°C for 2 hours, cooling by leaving standing for 16 hours and heating again at 75°C for 2 hours. Separately, 600 ml of city water was added to a mixture of 800 g of corn bran (the content of water: 12% by mass) and 200 g of saw dust of Japanese chestnut oak (the content of water: 16% by mass) as nutrients for microorganisms and the resultant mixture was disinfected by heating at 121°C for 20 minutes. The disinfected mixture was added to the contaminated soil disinfected above. The contaminated soil containing nutrients which was prepared as described above in an amount of 120 g was placed into a beaker having an inner volume of 2 liters and then 100 mg of fine particles of maghemite as the fine particles of a magnetic material were added and mixed. Disinfected water was added to the obtained mixture and the total amount of the mixture was adjusted to 200 g.

The soil in the beaker was inoculated with 1 g of a culture of Trametes versicolor: IFO 4937 which was obtained by culturing at 30°C for 14 days in a disinfected culture medium for a seed microorganism containing 20 g of corn bran, 20 g of saw dust of Japanese chestnut oak and 50 ml of water. The entire portions of the contaminated soil in the beaker which had been inoculated was slowly stirred once in three days. Water which had been disinfected in an amount corresponding to the amount lost by vaporization and nutrients in a suitable amount were supplemented.

For 2 months, the enzyme was released by the growth of Trametes versicolor and the chlorinated dioxins were decomposed by the enzyme adsorbed and fixed to the fine particles of maghemite in the manner described above. The residual amount of chlorinated dioxins in the soil was determined 2 months after the inoculation of Trametes versicolor to the contaminated soil. The rate of the residual chlorinated dioxins (expressed as TEQ) was calculated from the obtained results and was found to be 36%. The result is shown in Table 9.

Example 77

The same procedures as those conducted in Example 76 were conducted except that the amount of the fine particles of maghemite added to the contaminated soil in Example 76 (4) was changed to 1,000 mg. The result is shown in Table 9.

Example 78

The same procedures as those conducted in Example 76 were conducted except that the amount of the fine particles of maghemite added to the contaminated soil in Example 76 (4) was changed to 10,000 mg. The result is shown in Table 9.

Example 79

The same procedures as those conducted in Example 76 were conducted except that the amount of the fine particles of maghemite added to the contaminated soil in Example 76 (4) was changed to 100 mg and the microorganism was changed to Trametes versicolor: IFO 9791. The result is shown in Table 9.

Example 80

The same procedures as those conducted in Example 79 were conducted except that the amount of the fine particles of maghemite added to the contaminated soil in Example 79 was changed to 1,000 mg. The result is shown in Table 9.

Example 81

The same procedures as those conducted in Example 76 were conducted except that the amount of the fine particles of maghemite added to the contaminated soil in Example 76 (4) was changed to 1,000 mg and the microorganism was changed to Trametes versicolor: IFO 30388. The result is shown in Table 9.

Example 82

The same procedures as those conducted in Example 76 were conducted except that the microorganism was changed to Schizophyllum commune: IFO 6505. The result is shown in Table 9.

Example 83

The same procedures as those conducted in Example 82 were conducted except that the amount of the fine particles of maghemite added to the contaminated soil in Example 82 was changed to 1,000 mg. The result is shown in Table 9.

Table 9

| | Microorganism | Fine particles of magnetic material | | Rate of residual |
| | | material | amount (mg) | chlorinated dioxins (%) |
|---|---|---|---|---|
| Example 76 | Trametes versicolor IFO 4937 | maghemite | 100 | 36 |
| Example 77 | Trametes versicolor IFO 4937 | maghemite | 1,000 | 31 |
| Example 78 | Trametes versicolor IFO 4937 | maghemite | 10,000 | 26 |
| Example 79 | Trametes versicolor IFO 9791 | maghemite | 100 | 40 |
| Example 80 | Trametes versicolor IFO 9791 | maghemite | 1,000 | 33 |
| Example 81 | Trametes versicolor IFO 30388 | maghemite | 1,000 | 36 |
| Example 82 | Schizophyillum commune IFO 6606 | maghemite | 100 | 42 |
| Example 83 | Schizophyillum commune IFO 6505 | maghemite | 1,000 | 36 |

Example 84

(1) Culture of a microorganism

A liquid culture was obtained in accordance with the same procedures as those conducted in Example 76 (1) except that Trametes versicolor: IFO 9791 was used as the microorganism.

(2) Measurement of the laccase activity

Using the liquid culture obtained in (1) described above, the laccase activity in the liquid culture was measured and found to be 14.1 nkat/ml.

(3) Evaluation of stability of the enzyme

The stability of the enzyme was evaluated in accordance with the same procedures as those conducted in Example 76 (3) except that the liquid culture obtained in (1) described above was used and 2.5 g of fine particles of cobalt ferrite were used in place of the fine particles of maghemite. Two samples of the soil were taken at 4 and 168 hours after the fine particles of cobalt ferrite having the adsorbed and fixed enzyme was added to the soil. The result is shown in Table 10.

(4) Cleaning of the soil contaminated with chlorinated dioxins

The same procedures as those conducted in Example 76 (4) were conducted except that 100 mg of fine particles of cobalt ferrite were added and mixed with a contaminated soil containing nutrients which was prepared in accordance with the same procedures as those conducted in Example 76 (4) and the obtained mixture was inoculated with 1 g of a culture of Trametes versicolor: IFO 9791. The result is shown in Table 11.

Example 85

(1) Evaluation of stability of the enzyme

The stability of the enzyme was evaluated in accordance with the same procedures as those conducted in Example 84 (3) except that fine particles of manganese ferrite were used in place of the fine particles of cobalt ferrite used in Example 84 (3). The result is shown in Table 10.

(2) Cleaning of the soil contaminated with chlorinated dioxins

The same procedures as those conducted in Example 84 (4) were conducted except that fine particles of manganese ferrite were used in place of the fine particles of cobalt ferrite used in Example 84 (4). The result is shown in Table 11.

Example 86

(1) Evaluation of stability of the enzyme

The stability of the enzyme was evaluated in accordance with the same procedures as those conducted in Example 84 (3) except that fine particles of nickel ferrite were used in place of the fine particles of cobalt ferrite used in Example 84 (3). The result is shown in Table 10.

(2) Cleaning of the soil contaminated with chlorinated dioxins

The same procedures as those conducted in Example 84 (4) were conducted except that fine particles of nickel ferrite were used in place of the fine particles of cobalt ferrite used in Example 84 (4). The result is shown in Table 11.

Example 87

(1) Evaluation of stability of the enzyme

The stability of the enzyme was evaluated in accordance with the same procedures as those conducted in Example 84 (3) except that fine particles of zinc ferrite were used in place of the fine particles of cobalt ferrite used in Example 84 (3). The result is shown in Table 10.

(2) Cleaning of the soil contaminated with chlorinated dioxins

The same procedures as those conducted in Example 84 (4) were conducted except that fine particles of zinc ferrite were used in place of the fine particles of cobalt ferrite used in Example 84 (4). The result is shown in Table 11.

Table 10

| Fine particles of magnetic material | Time to measurement after addition of fine particles of magnetic material (hr) | Laccase activity (kat/g soil) |
|---|---|---|
| Cobalt ferrite | 4 | 14.6 |
| | 168 | 8.6 |
| Manganese ferrite | 4 | 13.4 |
| | 168 | 7.7 |
| Nickel ferrite | 4 | 14.4 |
| | 168 | 7.2 |
| Zinc ferrite | 4 | 13.7 |
| | 168 | 6.8 |

Table 11

| | Microorganism | Fine particles of magnetic material | | Rate of residual |
|---|---|---|---|---|
| | | material | amount (mg) | chlorinated dioxins (%) |
| Example 84 | Trametes versicolor IFO 9791 | cobalt ferrite | 100 | 53 |
| Example 85 | Trametes versicolor IFO 9791 | manganese ferrite | 100 | 54 |
| Example 86 | Trametes versicolor IFO 9791 | nickel ferrite | 100 | 49 |
| Example 87 | Trametes versicolor IFO 9791 | zinc ferrite | 100 | 52 |

INDUSTRIAL APPLICABILITY

In accordance with the present invention, hardly decomposable harmful substances, which are contained in exhaust gas, industrial waste water (waste liquid) and ash discharged from incineration apparatuses and manufacturing facilities into the natural environment and accumulated in water and soil contaminated with such substances, can be effectively decomposed and converted into harmless substances by a microorganism producing laccase or laccase produced by the microorganism. The present invention can be applied, in particular, to decomposition of hardly decomposable harmful substances such as specific components in agricultural chemicals, materials and products in the chemical industry and specific chemical substances formed during incineration of garbage and industrial waste materials and hardly decomposable harmful substances used as cleaning agents in the paper and pulp industry and industries related to precision machineries.

**EP 1 226 882 A1**

**Claims**

1. A process for decomposing hardly decomposable harmful substances which comprises bringing the hardly decomposable harmful substances into contact with at least one enzyme or microorganism selected from laccase and microorganisms producing laccase.

2. A process according to Claim 1, wherein the hardly decomposable harmful substances are hardly decomposable aromatic compounds having 6 or more carbon atoms or hardly decomposable halogenated hydrocarbons having 1 to 4 carbon atoms and at least one halogen atom.

3. A process according to Claim 2, wherein the hardly decomposable aromatic compounds having 6 or more carbon atoms are at least one compound selected from dioxins, halogenated biphenyls, bisphenols, alkylphenols, halogenated phenols and esters of phthalic acid.

4. A process according to Claim 2, wherein the hardly decomposable halogenated hydrocarbons having 1 to 4 carbon atoms and at least one halogen atom are at least one compound selected from monochloromethane, dichloromethane, trichloromethane, tetrachloromethane, monochloroethane, dichloroethane, trichloroethane, monochloroethylene, dichloroethylene, trichloroethylene and trichloropropylene.

5. A process according to Claim 1, wherein the microorganisms producing laccase is a microorganisms belonging to any genera selected from genera of Schizophyllum, Pleurotus, Trametes, Lentinus, Rhizoctonia, Funalia, Pycnoporus, Merulius, Myceliophtora, Coprinus, Agaricus, Pholiota, Flammulina, Ganoderma, Daedaleopsis, Favolus, Lyophyllum and Auricularia.

6. A process according to Claim 1, wherein the hardly decomposable harmful substances are brought into contact with at least one enzyme or microorganism selected from laccase fixed to a support material and microorganisms producing laccase and present in combination with a support material.

7. A process according to Claim 6, wherein the support material is at least one support material selected from activated carbon, charcoal, pumice, porous ceramics, alginic acid, ion exchange resins and photo-crosslinked resins.

8. A process according to Claim 6, wherein the support material has a cylindrical shape or a sheet shape knitted using polyurethane foam, carbon fiber or a synthetic resin of a fiber form.

9. A process according to Claim 1, wherein the hardly decomposable harmful substances are decomposed by bringing the hardly decomposable harmful substances into contact with laccase fixed to fine particles of a magnetic material.

10. A process according to Claim 9, wherein the fine particles of a magnetic material are fine particles of at least one magnetic material selected from maghemite, manganese ferrite, cobalt ferrite, nickel ferrite, zinc ferrite, magnetite and chromium dioxide.

11. A process according to Claim 1, wherein the hardly decomposable harmful substances and at least one enzyme or microorganism selected from laccase and microorganisms producing laccase are brought into contact with each other in water or soil in pH range of 3 to 11.

12. A process for decomposing dioxins which comprises bringing dioxins or coplanar PCB into contact with at least one enzyme or microorganism selected from laccase and microorganisms producing laccase in water or soil.

13. An agent for decomposing hardly decomposable harmful substances which comprises at least one enzyme or microorganism selected from laccase and microorganisms producing laccase.

14. An agent according to Claim 13, which further comprises a mediator.

15. An agent according to Claim 13, wherein the microorganisms producing laccase are microorganisms belonging to any genera selected from genera of Schizophyllum, Pleurotus, Trametes, Lentinus, Rhizoctonia, Funalia, Pycnoporus, Merulius, Myceliophtora, Coprinus, Agaricus, Pholiota, Flammulina, Ganoderma, Daedaleopsis, Favolus, Lyophyllum and Auricularia.

24

**16.** An agent for decomposing hardly decomposable harmful substances which comprises at least one enzyme or microorganism selected from laccase fixed to a support material and microorganisms producing laccase and present in combination with a support material.

**17.** An agent according to Claim 16, wherein the support material is at least one support material selected from activated carbon, charcoal, pumice, porous ceramics, alginic acid, ion exchange resins and photo-crosslinked resins.

**18.** An agent according to Claim 16, wherein the support material has a sheet shape or a cylindrical shape knitted using polyurethane foam, carbon fiber or a synthetic resin of a fiber form.

**19.** An agent for decomposing hardly decomposable harmful substances which comprises laccase fixed to fine particles of a magnetic material.

**20.** An agent according to Claim 19, wherein the fine particles of a magnetic material are fine particles of at least one magnetic material selected from maghemite, manganese ferrite, cobalt ferrite, nickel ferrite, zinc ferrite, magnetite and chromium dioxide.

**21.** An agent according to any one of Claims 13, 16 and 19, wherein the hardly decomposable harmful substances are hardly decomposable aromatic compounds having 6 or more carbon atoms or hardly decomposable halogenated hydrocarbons having 1 to 4 carbon atoms and at least one halogen atom.

**22.** An agent according to Claim 21, wherein the hardly decomposable aromatic compounds having 6 or more carbon atoms are at least one compound selected from dioxins, halogenated biphenyls, bisphenols, alkylphenols, halogenated phenols and esters of phthalic acid.

**23.** An agent according to Claim 21, wherein the hardly decomposable halogenated hydrocarbons having 1 to 4 carbon atoms and at least one halogen atom are at least one compound selected from monochloromethane, dichloromethane, trichloromethane, tetrachloromethane, monochloroethane, dichloroethane, trichloroethane, monochloroethylene, dichloroethylene, trichloroethylene and trichloropropylene.

## INTERNATIONAL SEARCH REPORT

| | International application No. |
|---|---|
| | PCT/JP00/06566 |

**A. CLASSIFICATION OF SUBJECT MATTER**
Int.Cl$^7$   B09B3/00, B01D53/34, C02F1/58, C02F1/72, A62D3/00

According to International Patent Classification (IPC) or to both national classification and IPC

**B. FIELDS SEARCHED**

Minimum documentation searched (classification system followed by classification symbols)
Int.Cl$^7$   B09B3/00,  B09B5/00,  B01D53/34,  C02F1/58,   C02F1/72,   C02F3/00,
A62D3/00

Documentation searched other than minimum documentation to the extent that such documents are included in the fields searched

Electronic data base consulted during the international search (name of data base and, where practicable, search terms used)
WPI (DIALOG)

**C. DOCUMENTS CONSIDERED TO BE RELEVANT**

| Category* | Citation of document, with indication, where appropriate, of the relevant passages | Relevant to claim No. |
|---|---|---|
| X | US, 4765901, A (Pacques B.V.,Balk,Netherlands), 23 August, 1988 (23.08.88), Claims & JP, 62-237999, A Claims & EP, 238148, A      & NL, 8600723, A & FI, 8701215, A      & DE, 3764679, G & ES, 2017700, B      & CA, 1307361, C | 1-3,5-11, 13-22 |
| A | & SU, 4202256, A | 1-23 |
| PX | JP, 2000-186272, A (Sanrou TACHIBANA), 04 July, 2000 (04.07.00), Claims; Par. Nos. 1, 14   (Family: none) | 1-3,5-18, 21-22 |
| X | WO, 9728257, A (NOVO NORDISK A/S), 07 August, 1997 (07.08.97), Claims & JP, 9-206071, A Claims & AU, 9714382, A      & EP, 877800, A | 1-3,5-11,13-14 ,16-22 |
| A | & CN, 1209839, A | 1-23 |

☒ Further documents are listed in the continuation of Box C.   ☐ See patent family annex.

| * Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
|---|---|

| Date of the actual completion of the international search<br>19 December, 2000 (19.12.00) | Date of mailing of the international search report<br>26 December, 2000 (26.12.00) |
|---|---|
| Name and mailing address of the ISA/<br>Japanese Patent Office | Authorized officer |
| Facsimile No. | Telephone No. |

Form PCT/ISA/210 (second sheet) (July 1992)

**EP 1 226 882 A1**

## INTERNATIONAL SEARCH REPORT

| | International application No. |
|---|---|
| | PCT/JP00/06566 |

| C (Continuation). DOCUMENTS CONSIDERED TO BE RELEVANT | | |
|---|---|---|
| Category* | Citation of document, with indication, where appropriate, of the relevant passages | Relevant to claim No. |
| X | WO, 9715354, A (BAYER AKTIENGESELLSCHAFT),<br>01 May, 1997 (01.05.97),<br>Claims; page 3, line 16<br>& JP, 11-514274, A<br>Claims; page 5, line 15<br>& AU, 9672902, A    & EP, 858357, A<br>& CN, 1200678, A    & DE, 59602194, G<br>& US, 6046045, A    & KR, 99064009, A | 1-2,5-11,13-18<br>,21<br><br><br>1-23 |
| A | & HU, 9802982, A    & ES, 2135254, T | |

Form PCT/ISA/210 (continuation of second sheet) (July 1992)

27